# NEW EUROPEAN PATENT SPECIFICATION

(11) **EP 2 745 711 B2**
(45) Date of publication and mention of the opposition decision: **16.10.2019**
(45) Mention of the grant of the patent: 11.01.2017
(21) Application number: 12199222.6
(22) Date of filing: 21.12.2012
(51) Int. Cl.: A23D 7/005, A23L 29/10, A23L 27/60, B01F 3/08, B01F 5/06, A23D 7/015, A23D 7/02, A23G 9/32, A23L 15/00, A23D 7/01, A23L 35/00

(54) **Process for production of low fat oil-in-water emulsions**
Verfahren zur Herstellung von Öl-in-Wasser-Emulsionen mit wenig Fett
Procédé de production d'émulsions de type huile dans eau à faible teneur en matière grasse

(43) Date of publication of application: 25.06.2014
(73) Proprietor: Deutsches Institut für Lebensmitteltechnik e.V., 49610 Quakenbrück (DE)
(72) Inventor: Aganovic, Kemal, 49610 Quakenbrück (DE); Buxmann, Waldemar, 22159 Hamburg (DE)
(74) Representative: Taruttis, Stefan Georg

(56) References cited:
- EP-A1- 2 417 858
- WO-A1-2008/130252
- WO-A1-2012/046072
- US-A- 4 034 124
- US-A- 4 902 526
- US-A- 5 795 614
- ANTON M ET AL: "Effect of high pressure treatment on rheology of oil-in-water emulsions prepared with hen egg yolk.", INNOVATIVE FOOD SCIENCE AND EMERGING TECHNOLOGIES, vol. 2, no. 1, 2001, pages 9-21, XP002695767,

## Description

The present invention relates to a process for producing an emulsion comprising an edible oil or fat and water for food purposes, foods compromising such an emulsion, and to a device suitable for carrying out the process.

The process allows the production of stable oil-in-water emulsions having an oil content as low as approximately 30% by weight having a significantly reduced content or no content of emulsifiers and no content of stabilising carbohydrates, e.g no content of modified or non-modified starch or thickeners like gum, e.g. of guar gum, xanthan or pectin.

### State of art

WO 2012/046072 describes a process for producing an edible emulsion of 50 - 60% weight oil by subjecting a mixture of oil and water with emulsifier and insoluble plant fibres to a high pressure homogenisation at 750 to about 1500 bar.

The article by Anton et al., Innovative Food Science & Emerging Technologies 2, 9-21 (2001) describes the production of an microbiologically stable emulsion by shear-homogenizing silica-gel purified sunflower oil with egg yolk at 20 000 rpm, followed by passage through a two-stage high-pressure homogenizer with the valves set at 200 and 40 bar, resp.. The emulsion was then filled into plastic bags and treated by 200 or 500 MPa static pressure.

US 8 902 526 describes the homogenization of intact or peeled soybeans to a slurry of particles of 50 µm or smaller, to which slurry 3-40 % vegetable fat and 0.1 - 1.0 % emulsifier are added, followed by heating to 95-100 °C for 3-10 min. The resulting high-fat slurry is homogenized at a pressure of 400 - 1000 kg/cm², approx. 392 - 980 bar to produce "high-fat whole soybean milk".

US 5 795 614 describes the homogenization of vegetable oil, egg-yolk, acid and water with 5 - 30 % inulin at a shear pressure of 5000 to 15000 psig, approx. 345 - 1034 bar overpressure. US 4 034 124 describes the preparation of mayonnaise in a colloid mill from 15.45 g salted fresh whole egg, treated with phospholipase for 3 h at 55 °C, 3,8 g water, 5,3 g vinegar, 75 g maize oil, 0.045 g spices and 0.4 g thickening agent or the dilution with water of 7.5 g egg yolk, 5 ml water, 5 ml 10% acetic acid, 80 g soybean oil that were homogenized in an Ultra-Turrax.

WO2012/046072 A1 describes emulsions containing insoluble fibres from citrus fruit, vegetables and grains or from fruit with an oil content below 60 %, homogenized by high pressure homogenization at 750 - 1500 bar. The example contains 0 to 50 % oil, 40-70 % water, 1-5 % egg yolk, 0-2% salt, 0-4 % sugar, 0.2 - 2 % fibres, 0.1 to 1 % egg white powder, 1.5 % starch and 0.5-4 % vinegar.

EP 2417858 A1 describes emulsions of 55 - 72 % oil, prepared at high pressure homogenization of 10 - 300 bar. According to the examples, xanthan gum was contained in the mixture to be homogenized, and later starch was added along with vinegar and water.

EP 1222957 A1 describes a production process for oil-in-water emulsions by pumping a pre-emulsion containing the oil, water and emulsifier through a sieve plate at the pressure of at least 5 bar.

EP 1389051 B1 describes the production of mayonnaise by mixing an egg composition made at 55°C for 180 min of whole egg, egg yolk and salt at 65.9 : 25 : 9.1, then treated with Lecitase L10 (Novo Nordisk), with sunflower oil, followed by high-pressure homogenisation (Gaulin) at 50 - 200 bar for 5 min. After homogenisation, vinegar and lactic acid were added under low shear stirring. The final composition contains 50 % oil, 5 - 7 % egg composition, water-soluble sodium caseinate, acidulant and water.

### Object of the invention

It is an object of the invention to provide an alternative process for the production of oil-in-water food-grade emulsions allowing a reduced content of oil at a cream-like consistency, and to provide the oil-in-water food-grade emulsions having a reduced content of oil, preferably containing no artificial emulsifiers.

### General description of the invention

The invention achieves the object by the features of the claims, especially by a process for producing oil-in-water food-grade emulsions having an oil content of at maximum 30 wt-%, e.g of at maximum 28 wt-%. Optionally, the content of water-miscible ingredients, especially the water content is at least double the content of oil.

The process comprises the steps of mixing the ingredients of an oil-in-water food-grade emulsion and subjecting the mixture of ingredients to high-pressure homogenization by passing the mixture of ingredients through an opening at a pressure difference of at least 2000 bar, e.g. at 3000 or at 3500 to 4000 bar. The step of mixing the ingredients can be by application of shear force, e.g. using a stirrer like a blender, e.g. a rotating mixer at 2000 to 3000 rpm or an Ultra-Turrax

(Janke&Kunkel KG, IKA Werk, Germany) and/or a low pressure homogenizer, e.g. for a pressure difference of 10 to 100 bar, preferably until oil droplets of at maximum 10 µm diameter, more preferably of at maximum 5 µm are generated.

It has been found that the high-pressure homogenization of the process yields a stable emulsion of oil in water also in the absence of artificial emulsifiers, while the emulsion has a cream-like consistency, e.g. like mayonnaise.

The emulsion has 0% content of thickener, e.g. is free of polymeric carbohydrate, e.g. starch, modified starch, of gum, e.g. guar gum, of cellulose, cellulose derivatives, e.g. carboxymethyl cellulose (CMC), guar flower, xanthan, pectin, locust bean gum and/or free of alginate and/or of carrageen.

The oil-in-water emulsion comprises or consists of the following ingredients:
- food-grade oil at maximally 30 wt-%, saturated or non-saturated, liquid at 5 to 90°C, preferably liquid above 20°C or liquid above 30°C, e.g. vegetable oil, for example from the group comprising or consisting of rapeseed oil, sunflower oil, olive oil, soy bean oil, nut oil, cacao fat, cotton seed oil and/or sesame oil, and/or oil of animal origin, preferably of milk origin, for example from the group comprising milk fat, butter, purified butter fat,
- water at least 50 wt-%, more preferably at least 56 or 60 wt-%,
- stabilizer selected from the group consisting of whole egg, egg yolk and mixtures thereof, to at least 5 wt-%, to at least 10 wt-% or to at least 15 wt-%, e.g. up to 20 wt-%,
- thickener to 0 wt-%, free from thickener, the thickener being selected from the group consisting of polymeric carbohydrate, e.g. starch, modified starch, gum, e.g. guar gum, guar flower, cellulose, cellulose derivatives, carboxymethyl cellulose, xanthan, pectin, alginate, locust bean gum, carrageenan and/or carrageen,
- optionally acidulant, e.g. food-grade liquid or dry acid, e.g. from the group comprising or consisting of phosphoric acid, acetic acid, e.g. as vinegar, malic acid, malonic acid, lactic acid, citric acid and salts thereof, e.g. at 0 to 5 wt-%, preferably at 1 to 3 wt-%,
- optionally sweetener, e.g. carbohydrate sweetener, for example sucrose, sugar alcohol, and/or glucose, and/or non-carbohydrate sweetener, e.g. tripeptide sweetener, or a mixture thereof, e.g. at 0 to 30 wt-%, preferably at 1 to 20 wt-%, e.g. at 2 to 5 wt-%,
- optionally spice, flavour and/or colorant, e.g. plant extract, e.g. from the group comprising mustard, pepper, beet extract, yeast extract, e.g. at 0 to 10 wt-%, preferably at 1 to 5%,
- optionally salt, e.g. at 0 to 5 wt-%, e.g. at 1 to 3 wt-%.

The egg yolk and/or whole egg used as a stabilizer preferably originates from Gallus domesticus. The egg yolk and/or whole egg is at least partially enzymatically hydrolysed by contact with phospholipase, and/or optionally pasteurized. Preferably, the degree of hydrolysation that is achieved by the enzymatic modification is from 30 % to 90% of the content of enzymatically hydrolysable content of the egg yolk and/or whole egg, respectively.

The stabilizer consists of whole egg, egg yolk or mixtures thereof, e.g. at least 10 wt-%, and for at least partially hydrolysed whole egg, egg yolk or mixtures thereof e.g. at 4 to 8 wt-%. The stabilizer consisting of at least partially hydrolysed, phospholipase-treated whole egg, egg yolk or mixtures thereof has the advantage of allowing higher processing temperatures, e.g. of up to 90°C, preferably of 70 to 80°C, a temperature occurring e.g. at the high-pressure homogenization step, and in addition allows a lower content of the stabilizer compared to non-hydrolysed whole egg, egg yolk or mixtures thereof. Optionally, the whole egg or egg yolk, each at least partially hydrolysed, can be salted, e.g. containing 0.1 to 3 wt-% salt (NaCl) and/or be dried, e.g. in the form of powder.

Optionally, the mixture of ingredients is cooled prior to high-pressure homogenization, e.g. cooled to a temperature of 0 to 10°C, preferably to 2 to 5°C. Cooling of the mixture of ingredients allows the high-pressure homogenization at pressures of 2500 bar and above, e.g. at 2800 to 4000 bar with heating caused thereby to remain below 100°C, e.g. at or below 70 to 98°C. Preferably, the emulsion obtained by high-pressure homogenization is cooled, preferably immediately, e.g. to 20°C or to 10°C, preferably to 5°C, optionally frozen, e.g. in the case of ice cream.

Preferably, at homogenization the mixture is passed into a gas-filled volume, e.g. filled with air, preferably filled with at least 95% to 99% nitrogen. It has been found that the resulting emulsion contains gas distributed in the form of small bubbles. Preferably, the resulting emulsion has a gas content of approx. up to 2 mL/100g, preferably of 0.5 to 1.9 mL/100g, e.g. 1.85 mL/100g.

Preferably, the emulsion is free from artificial emulsifying agents.

It has been found that the high-pressure homogenization of the mixture of ingredients results in an oil-in-water emulsion which is stable, e.g. the emulsion does not phase-separate, preferably for at least 20 days at room temperature. Further, the emulsion produced by the process has small diameter oil droplets, e.g. having an average diameter of 1 to 5 µm, preferably of 1 to 3 µm, e.g. at 1.5 to 2.5 µm, preferably at a narrow size distribution. Generally, in the description, droplet sizes are given as d(0.5), i.e. indicating that 50% of the oil volume is contained in droplets of the size indicated and smaller.

Preferably, the emulsion produced by the process has a dynamic viscosity of 70 to 200 Pas, e.g. to 150 or to 100 Pas, measured at 20°C at a shear rate of 1/s using a rheometer. Preferably, the viscosity is determined following 24h at 20°C subsequent to the high-pressure homogenisation. These characteristics of the emulsion are believed to be the cause for the pleasant mouth-feel of the emulsion.

The emulsion can be processed further by admixing with other food components which form a particulate mixture with the emulsion, e.g. raw, processed or cooked fruit and vegetable, meat and fish, and components thereof. Accordingly, the process can comprise the step of admixing the emulsion with other food components, and the products comprise admixtures of the emulsion and other food components.

### Detailed description of the invention

The invention is now described in greater detail with reference to examples.

### Example 1: Production of low-fat oil-in-water emulsion

As an example for an oil-in-water emulsion, low-fat emulsion without thickener and without artificial emulsifier was produced. This emulsion can be mixed with salt, acidulant and spices for generating a mayonnaise. A mixture of ingredients was prepared by mixing in a laboratory blender (Fluid Kotthoff GmbH, Germany) at 2840 rpm consisting of
59 wt-% water
30 wt-% sunflower oil
6 wt-% liquid egg yolk
3.2 wt-% 10% vinegar
1.8 wt-% sucrose.

The oil droplet size was determined to 3.4 µm.

The mixture was high-pressure homogenized using different pressure levels to be released into ambient atmosphere through a homogenisation valve (Stansted, England). Following the high-pressure homogenisation, the sizes of the oil droplets were measured using a Master Sizer.

| Homogenization pressure released (bar) | Oil droplet size (diameter, µm) |
|---|---|
| 300 | 1.2 |
| 600 | 1.1 |
| 950 | 0.9 |
| 1800 | 0.8 |

Measurements following storage of the emulsion at 20°C for 7 days gave the same oil droplet sizes, indicating the stability of the emulsion. These results show that a stable oil-in-water emulsion having a low fat content and without additional thickeners can be produced by the process using high-pressure homogenisation.

### Example 2: Production of low-fat mayonnaise

A mixture of the following mayonnaise ingredients was prepared by mixing in a rotary mixer (Fluid Kotthoff, Germany) at 2840 rpm
56 wt-% water,
8 wt-% pasteurized liquid egg yolk,
3 wt-% 10% vinegar,
2 wt-% sucrose,
1 wt-% mustard (dry powder),
1 wt-% salt,
and adding 28 wt-% rapeseed oil during 3 min under stirring, followed by 1 min stirring, then adding 1 wt-% dry citric acid (99%).

Replacing the pasteurized liquid egg yolk by pasteurized liquid egg yolk modified by hydrolysation with phospholipase, this mixture was repeated.

Each mixture was pressurized to a pressure of 1000 to 3500 bar, as indicated below, and passed through a homogenisation valve for expansion into ambient pressure. The following oil droplet sizes were determined at the pressures indicated:

| Stabilizer, homogenization pressure | Oil droplet size (µm) | Viscosity (Pas, at 20°C) |
|---|---|---|
| pasteurized liquid egg yolk, 1000 bar | 4.7 | |
| modified pasteurized liquid egg yolk, 1000 bar | 2.6 | |
| modified pasteurized liquid egg yolk, 1500 bar | 1.3 | |
| modified pasteurized liquid egg yolk, 2000 bar | 2.8 | 74.8 |
| modified pasteurized liquid egg yolk, 2500 bar | 0.9 | 101.8 |
| modified pasteurized liquid egg yolk, 3000 bar | 1.5 | |
| modified pasteurized liquid egg yolk, 3500 bar | 9.1 | |

These exemplary compositions show that a pressure of at least 2500 bar results in a stable 30 wt-% oil-in-water emulsion having small oil droplets without thickener. The mayonnaise produced provided a pleasant mouth-feel, comparable to a traditional mayonnaise containing 70 wt-% oil, 8 to 10 wt-% egg yolk, preferably also enzymatically hydrolysed, 3 wt-% 10% vinegar, 2 wt-% sucrose, 1 wt-% mustard (dry powder), 1 wt-% salt, and without thickener.

A microbial analysis just after the high-pressure homogenisation and after incubation at 20°C for 20 days for each composition showed approx. 50 CFU (colony forming units), with yeast < 10 CFU and moulds < 10 CFU.

The microbial analysis shows that the process for production has the advantage of producing an emulsion with low content of viable microbes without an additional conserving step, e.g. without an additional heat-treatment step like e.g. pasteurization.

### Example 3: Production of low-fat oil-in-water emulsion with butter fat

As an example for an oil-in-water emulsion wherein the oil is solid at room temperature, Hollandaise was produced. The following ingredients were mixed and the mixture was subjected to high-pressure homogenization as described in example 2:
56 wt-% water,
8 wt-% enzymatically modified (phospholipase) pasteurized liquid egg yolk,
3 wt-% 10% vinegar,
2 wt-% sucrose,
optionally 1 wt-% mustard (dry powder),
1 wt-% salt,
optionally 1 wt-% lemon juice,
and adding 28 to 30 wt-% molten butter during 3 min under stirring.

The mixture was homogenized releasing a pressure of 1000, 1500, 2000, 2500, 3000 or 3500 bar into the ambient atmosphere. The resultant emulsion was stable and had a satisfactory viscosity.

### Example 4: Production of salad dressing

The following mixture was prepared:
59 wt-% water,
25 wt-% sun flower oil and/or olive oil,
6 wt-% egg yolk, enzymatically modified,
3 wt-% vinegar (10%),
1 wt-% mustard powder,
1 wt-% dry citric acid,
1 wt-% balsamic vinegar,
1 wt-% salt,
2 wt-% sucrose,
1 wt-% spices including garlic, pepper, mixed herbs, optionally honey by mixing in a rotary mixer (Fluid Kotthoff, Germany) at 2840 rpm and homogenizing the mixture at a pressure of 2000 to 3000 bar.

### Example 5: Production of ice cream

The following mixture was prepared:
60 wt-% water,
12 wt-% sucrose,
10 wt-% skim milk powder,
10 wt-% fat, e.g. butter fat,
5 wt-% glucose sirup,
3 wt-% egg yolk by mixing in a rotary mixer (Fluid Kotthoff,
Germany) at 2840 rpm and homogenizing the mixture at a pressure of 2000 to 3000 bar. The resultant emulsion was cooled to below 0°C, preferably to -5 to -10°C.

Optionally, an emulsifying agent, e.g. mono- and di-glycerides could be added to the composition prior to mixing.

## Claims

1. Process for producing an oil-in-water emulsion of ingredients comprising an edible oil and water, the process comprising mixing the ingredients and subjecting the mixture of ingredients to pressure and passing the ingredients through an opening while releasing a pressure difference, **characterized in that** the pressure difference is at least 2000 bar and the mixture of ingredients contains
- a maximum of 30 wt-% food-grade oil, liquid at 5 to 90°C,
- at least 50 wt-% water,
- to at least 5 wt-% stabilizer selected from the group consisting of whole egg, egg yolk and mixtures thereof, wherein the whole egg or egg yolk is enzymatically modified by a phospholipase.
- no thickener selected from the group comprising polymeric carbohydrate, e.g. starch, modified starch, gum, e.g. guar gum, guar flower, cellulose, cellulose derivatives, carboxymethyl cellulose, xanthan, pectin, alginate, locust bean gum, carrageenan and/or carrageen,
- optionally acidulant,
- optionally sweetener,
- optionally spice,
- optionally salt,
wherein the high pressure homogenization yields a stable emulsion of oil in water.

2. Process according to one of the preceding claims, **characterized in that** the oil is contained to at maximum 28 wt-%.

3. Process according to one of the preceding claims, **characterized in that** the pressure difference is at least 2500 bar.

4. Process according to one of the preceding claims, **characterized in that** the oil is selected from rapeseed oil, sunflower oil, olive oil, soy bean oil, nut oil, cacao fat, cotton seed oil, sesame oil, milk fat, butter, and/or purified butter fat, liquid above 20°C.

5. Process according to one of the preceding claims, **characterized in that** the oil-in-water emulsion is subsequently mixed with other food components which form a particulate mixture with the emulsion.

6. Process according to one of the preceding claims, **characterized in that** the degree of hydrolysis of the enzymatically modified whole egg or egg yolk is 30 % to 90%.

7. Process according to one of the preceding claims, **characterized in that** at homogenization the mixture is passed into a gas-filled volume, filled with at least 95% to 99% nitrogen.

8. Process according to one of the preceding claims, **characterized in that** the mixture of ingredients is cooled prior to homogenization to a temperature of 0 to 10°C, preferably to 2 to 5°C.

## Patentansprüche

1. Verfahren zur Herstellung einer Öl-in-Wasser-Emulsion von Inhaltsstoffen, die ein essbares Öl und Wasser umfasst, wobei das Verfahren das Mischen der Inhaltsstoffe und Aussetzen der Mischung der Inhaltsstoffe unter Druck und Durchtretenlassen der Inhaltsstoffe durch eine Öffnung umfasst, während eine Druckdifferenz freigesetzt wird, **dadurch gekennzeichnet, dass** die Druckdifferenz wenigstens 2000 bar beträgt und die Mischung der Inhaltsstoffe
- ein Maximum von 30 Gew.-% Lebensmittelöl, flüssig bei 5 bis 90°C,
- wenigstens 50 Gew.-% Wasser,
- wenigstens 5 Gew.-% Stabilisator, der aus der Gruppe ausgewählt ist, die aus Vollei, Eigelb oder Mischungen daraus besteht, wobei das Vollei oder Eigelb durch eine Phospholipase enzymatisch modifiziert ist
- kein Verdickungsmittel, das aus der Gruppe ausgewählt ist, die Kohlenhydratpolymere, z.B. Stärke, modifizierte Stärke, Gummen, z.B. Guaran, Guarkernmehl, Cellulose, Cellulosederivate, Carboxymethylcellulose, Xanthan, Pektin, Alginat, Johannisbrotgummi, Carrageenan und/oder Carrageen,
- optional Säuerungsmittel,
- optional Süßungsmittel,
- optional Gewürz,
- optional Salz
enthält, wobei die Hochdruckhomogenisierung eine stabile Emulsion von Öl in Wasser ergibt.

2. Verfahren nach einem der voranstehenden Ansprüche, **dadurch gekennzeichnet, dass** das Öl zu maximal 28 Gew.-% enthalten ist.

3. Verfahren nach einem der voranstehenden Ansprüche, **dadurch gekennzeichnet, dass** die Druckdifferenz wenigstens 2500 bar beträgt.

4. Verfahren nach einem der voranstehenden Ansprüche, **dadurch gekennzeichnet, dass** das Öl ausgewählt ist unter Rapsöl, Sonnenblumenöl, Olivenöl, Sojabohnenöl, Nussöl, Kakaofett, Baumwollsaatöl, Sesamöl, Milchfett, Butter und/oder gereinigtem Butterfett, das oberhalb 20°C flüssig ist.

5. Verfahren nach einem der voranstehenden Ansprüche, **dadurch gekennzeichnet, dass** die Öl-in-Wasser-Emulsion nachfolgend mit anderen Lebensmittelbestandteilen gemischt wird, um eine partikelförmige Mischung mit der Emulsion zu bilden.

6. Verfahren nach einem der voranstehenden Ansprüche, **dadurch gekennzeichnet, dass** der Grad der Hydrolyse des enzymatisch modifiziertem Volleis oder Eigelbs 30 bis 90% beträgt.

7. Verfahren nach einem der voranstehenden Ansprüche, **dadurch gekennzeichnet, dass** die Mischung bei der Homogenisation in ein gasgefülltes Volumen eintreten gelassen wird, das mit wenigstens 95% bis 99% Stickstoff gefüllt ist.

8. Verfahren nach einem der voranstehenden Ansprüche, **dadurch gekennzeichnet, dass** die Mischung von Inhaltsstoffen vor der Homogenisation auf eine Temperatur von 0 bis 10°C, vorzugsweise auf 2 bis 5°C gekühlt wird.

## Revendications

1. Procédé de production d'une émulsion huile-dans-eau d'ingrédients comprenant une huile comestible et de l'eau, le procédé comprénant à mélanger les ingrédients et à soumettre le mélange d'ingrédients à la pression et à faire passer les ingrédients à travers une ouverture tout en appliquant une différence de pression, **caractérisé en ce que** la différence de pression est d'au moins 2000 bars et que le mélange d'ingrédients contient
- un maximum de 30% en poids d'huile de qualité alimentaire, liquide à 5 à 90°C,
- au moins 50% en poids d'eau,
- au moins 5% en poids de stabilisant choisi dans le groupe consistant de l'oeuf entier, du jaune d'oeuf et des mélanges de ceux-ci, dont l'oeuf entier ou le jaune d'oeuf enzymatiquement modifié par une phospholipase,
- aucun agent épaississant choisi dans le groupe comprenant des glucides polymères, par exemple l'amidon, l'amidon modifié, la gomme, par exemple la gomme de guar, la fleur de guar, la cellulose, les dérivés de cellulose, la carboxyméthylcellulose, le xanthane, la
pectine, l'alginate, la gomme de caroube, le carraghénane et/ou la carragénine,
- éventuellement un acidulant,
- éventuellement un édulcorant,
- éventuellement une épice,
- éventuellement du sel
dans laquelle l'homogénéisation haute pression produit une émulsion stable d'huile dans l'eau.

2. Procédé selon l'une quelconque des revendications précédentes, **caractérisé en ce que** l'huile est contenue au maximum à hauteur de 28% en poids.

3. Procédé selon l'une quelconque des revendications précédentes, **caractérisé en ce que** la différence de pression est d'au moins 2500 bars.

4. Procédé selon l'une des revendications précédentes, **caractérisé en ce que** l'huile est choisie parmi l'huile de colza, l'huile de tournesol, l'huile d'olive, l'huile de soja, l'huile de noix, la graisse de cacao, l'huile de graine de coton, l'huile de sésame, les matières grasses du lait, le beurre et/ou la graisse de beurre purifiée, le liquide au-dessus de 20°C.

5. Procédé selon l'une des revendications précédentes, **caractérisé en ce que** l'émulsion huile-dans-eau est ensuite mélangée avec d'autres constituants alimentaires, qui forment un mélange particulaire à l'émulsion.

6. Procédé selon l'une des revendications précédentes, **caractérisé en ce que** le degré d'hydrolyse de l'oeuf entier ou du jaune d'oeuf modifiés par voie enzymatique est de 30% à 90%.

7. Procédé selon l'une des revendications précédentes, **caractérisé en ce que** lors de l'homogénéisation, le mélange est introduit dans un volume rempli de gaz, rempli d'au moins 95% à 99% d'azote.

8. Procédé selon l'une des revendications précédentes, **caractérisé en ce que** le mélange d'ingrédients est refroidi avant l'homogénéisation à une température de 0 à10°C, de préférence à 2 à 5°C.
